# EUROPÄISCHE PATENTSCHRIFT

(11) **EP 1 614 180 B1**
(45) Veröffentlichungstag und Bekanntmachung des Hinweises auf die Patenterteilung: **28.02.2007**
(21) Anmeldenummer: 04726431.2
(22) Anmeldetag: 08.04.2004
(51) Int. Cl.: H01M 8/10, H01M 8/24

(54) **KATHODE FÜR EINE DIREKT-METHANOL-BRENNSTOFFZELE SOWIE VERFAHREN ZUM BETREIBEN DERSELBEN**
CATHODE FOR A DIRECT METHANOL FUEL CELL AND METHOD FOR OPERATING THE SAME
CATHODE POUR PILE A COMBUSTIBLE METHANOL DIRECT ET PROCEDE POUR LA FAIRE FONCTIONNER

(30) Priorität: 16.04.2003 DE 10317780
(43) Veröffentlichungstag der Anmeldung: 11.01.2006
(73) Patentinhaber: Forschungszentrum Jülich GmbH, 52425 Jülich (DE)
(72) Erfinder: DOHLE, Hendrik, 52224 Stolberg (DE); MÜLLER, Martin, 53115 Bonn (DE); BRINGMANN, Jan, Dr., 76726 Germersheim (DE); MERGEL, Jürgen, 52428 Jülich (DE); STOLTEN, Detlef, 52076 Aachen (DE)
(86) Internationale Anmeldenummer: PCT/DE2004/000735
(87) Internationale Veröffentlichungsnummer: WO 2004/093225

(56) Entgegenhaltungen:
- EP-A- 1 096 586
- DE-A- 10 048 182
- US-A- 4 585 711
- US-A1- 2003 006 145
- US-B1- 6 541 147

## Beschreibung

Die Erfindung betrifft eine Kathode für eine Niedertemperatur-Brennstoffzelle, insbesondere für eine Direkt-Methanol-Brennstoffzelle, sowie ein vorteilhaftes Verfahren zum Betreiben derselben.

Eine Niedertemperatur-Brennstoffzelle, insbesondere eine Polymer-Elektrolyt-Membran- (PEM-) Brennstoffzelle, besteht aus einer Anode und einer Kathode, die durch eine für Ionen durchlässige Polymer-Membran getrennt sind. Dieser Elektrolyt ist ca. 0,1 mm dick. Die gasdichte Membran, die für Wasserstoff und Sauerstoff undurchlässig ist, und auch nicht Elektronen leitend ist, ist in der Regel für Protonen durchlässig. Die Katalysatorschicht weist in der Regel Platin oder Platinlegierungen auf, und wird als dünne, katalytisch wirkende Schicht auf der Membran angeordnet. Die Elektroden weisen eine hohe Porosität und damit eine große Oberfläche auf, die vorteilhaft für die elektrochemischen Umsetzungen zur Verfügung steht. Die elektronisch leitende Diffusionsschicht der Elektroden ist mit den Stromabnehmern verbunden und grenzt direkt an die Katalysatorschicht an. Über die sogenannten bipolaren Platten werden einerseits die Einzelzellen getrennt und anderseits die Betriebsmittel, Brennstoff und Oxidationsmittel, zugeführt. Mit Hilfe geeigneter Verteilerstrukturen werden die Betriebsmittel regelmäßig homogen an die Elektroden heran geführt.

Der der Anode zugeführte Wasserstoff setzt sich mit Hilfe des Katalysators elektrochemisch um. Die dabei frei werdenden Elektronen gelangen über Stromabnehmer in den äußeren Stromkreislauf, während die Protonen durch die Elektrolytmembran zur Kathode diffundieren. Die negativ geladenen Elektrolytionen leiten das Proton weiter, wobei die Ionen selber ortsfest bleiben. An der Katalysatorschicht der Kathode rekombinieren die Sauerstoffionen aus der Luft, die Elektronen aus dem Stromkreislauf sowie die Protonen aus der Membran und erzeugen unter Wärmeentwicklung Wasser. Die Membran auf der Anodenseite ist regelmäßig feucht zu halten, während auf der Kathodenseite das Produktwasser regelmäßig entfernt werden muß.

Aus US 2003/006145 A1 ist eine Brennstoffzelle mit einer Wasserstoffelektrode, einer Membran sowie einer Sauerstoffelektrode bekannt, wobei die Sauerstoffelektrode (Kathode) an einer Seite direkt an die Membran angrenzt, während sich an der anderen Seite eine poröse Schicht aufweisendes Flowfield anschließt.

Einen ähnlichen Aufbau einer Brennstoffzelle zeigt auch die DE 100 48 182 A1, bei der eine poröse Elektrode mit einer Elektrolytkatalysatorlage als Kathode eingesetzt wird. Auf der der Membran abgewandten Seite der Kathode schließt sich eine Kathodendiffusionsanordnung an.

In EP 1 096 586 A2 wird die Herstellung einer Elektrode beschrieben, die auf einem Substrat eine nicht gleichförmig poröse Elektrodenschicht umfassend einen Elektrokatalysator aufweist, wobei die Konzentration des Elektrokatalysators innerhalb der Ebene der Elektrode variiert.

Die in US 4, 585, 711 offenbarte Elektrode weist eine perforierte, leitfähige Folie auf, an deren einer Seite eine halbdurchlässige Schicht aus PTFE und an deren anderer Seite eine elektrokatalytische Schicht aus mit Platin beschichteten Kohlenstoffpartikeln in einer PTFE-Matrix angeordnet ist.

Bei den vorgenannten Kathoden grenzt die Katalysatorschicht entweder direkt an die Elektrolytmembran oder es handelt sich um Kathoden, bei den eine Diffusionsschicht mit Katalysator durchsetzt ist.

Bei den aus dem Stand der Technik bekannten Niedertemperatur-Brennstoffzellen tritt häufig das Problem auf, dass die Diffusionsschicht der Kathode durch permeiertes oder an der Kathode erzeugtes Wasser derart gefüllt ist (Flooding), dass ein reibungsloser Sauerstofftransport bis an die Katalysatorschicht der Kathode nicht mehr gegeben ist. Als Folge daraus werden diese Brennstoffzellen regelmäßig mit einen hohen Überschuss an Sauerstoff gefahren, um die vorgenannten Transporthemmungen für der Sauerstoff zu verringern.

### Aufgabe und Lösung

Die Aufgabe der Erfindung ist es, eine Brennstoffzelle zu schaffen, bei der die vorgenannte Massentransporthemmung und das Zulaufen der Kathode mit permeiertem und produziertem Wasser (Flooding) regelmäßig verhindert werden kann.

Die Aufgabe der Erfindung wird gelöst durch eine Brennstoffzelle mit der Gesamtheit an Merkmalen gemäß Hauptanspruch, sowie durch ein Verfahren zum Betreiben dieser Brennstoffzelle gemäß Nebenanspruch. Vorteilhafte Ausgestaltungen der Brennstoffzelle und des Verfahrens finden sich in den jeweils darauf rückbezogenen Ansprüchen.

### Gegenstand der Erfindung

Die der Erfindung zugrunde liegende Idee basiert darauf, den an der Kathode notwendigen Sauerstoff nicht erst durch die poröse Schicht (Diffusionsschicht) der Kathode bis zur Katalysatorschicht zu führen, da sich diese regelmäßig mit Wasser zusetzt und eine Massentransporthemmung verursacht.

Zur Lösung des Problems weist daher die erfindungsgemäße Brennstoffzelle eine Kathode auf, umfassend eine Diffusionsschicht mit einer darauf angeordneten Katalysatorschicht, bei der die Diffusionsschicht direkt an die Ionen leitende Elektrolyt-Membran angrenzt und die dem freien Kathodenraum zugewandte Seite der Katalysatorschicht direkt Sauerstoff zugeführt werden kann.

Im Prinzip handelt es sich dabei um ein Vertauschen der bislang üblichen Anordnung der Schichten einer Kathode innerhalb einer Brennstoffzelle. Da bei der erfindungsgemäßen Kathode in der Diffusionsschicht neben dem Elektronentransport nun auch ein Ionentransport stattfindet, weist die Diffusionsschicht ein Ionen leitendes Material auf. Insbesondere weist sie einen hohen Anteil an einer Ionomerphase auf.

Bei der erfindungsgemäßen Kathode kann nur vorteilhaft der gasförmige Sauerstoff, gegebenenfalls über eine Verteilerstruktur, direkt bis an die Katalysatorschicht geführt werden. Die Protonen wandern von der Anode durch die Elektrolyt-Membran und weiter durch die sowohl Elektronen als auch Ionen leitende Diffusionsschicht der Kathode bis zur Katalysatorschicht, wo die elektrochemische Umsetzung erfolgt. Die Elektronen werden über den Stromleiter ebenfalls durch die Elektronen leitende Diffusionsschicht der Kathode bis zur Katalysatorschicht transportiert. Die mit Wasser gefüllte Diffusionsschicht (Flooding) bedeutet nun vorteilhaft keine Transporthemmung mehr für den Sauerstoff. Gleichzeitig kann das Wasser, welches an der Katalysatorschicht erzeugt wird, leicht in den freien Kathodenraum abgeleitet werden und muss nicht mehr, wie beim Stand der Technik vorgesehen, zunächst durch die Diffusionsschicht wandern.

Die erfindungsgemäße Brennstoffzelle bzw. das Verfahren zum Betreiben einer solchen weisen die folgenden Vorteile gegenüber dem Stand der Technik auf:
- Die Katalysatorschicht kann auf einfache Weise ohne weitere Stofftransporthemmungen mit Sauerstoff versorgt werden.
- Das an der Katalysatorschicht gebildete Wasser kann zusammen mit dem permeierten Wasser leichter aus dem Kathodenraum ausgetragen werden, da es direkt in den freien Kathodenraum abfließen kann und nicht erst durch ein poröses Material wandern muss.

### Spezieller Beschreibungsteil

Nachfolgend wird der Gegenstand der Erfindung anhand von zwei Figuren und einem Ausführungsbeispiel näher erläutert, ohne dass der Gegenstand der Erfindung dadurch beschränkt wird.

Legende zu den Figuren:
1 Ionen leitende Elektrolytmembran
2 Anode:
   2a elektrisch leitende Diffusionsschicht
   2b Katalysatorschicht
   2c freier Anodenraum, ggfs. mit Verteilerstruktur
3 Kathode:
   3a elektrisch leitende Diffusionsschicht
   3b Katalysatorschicht
   3c freier Kathodenraum, ggfs. mit Verteilerstruktur
4 Stromabnehmer

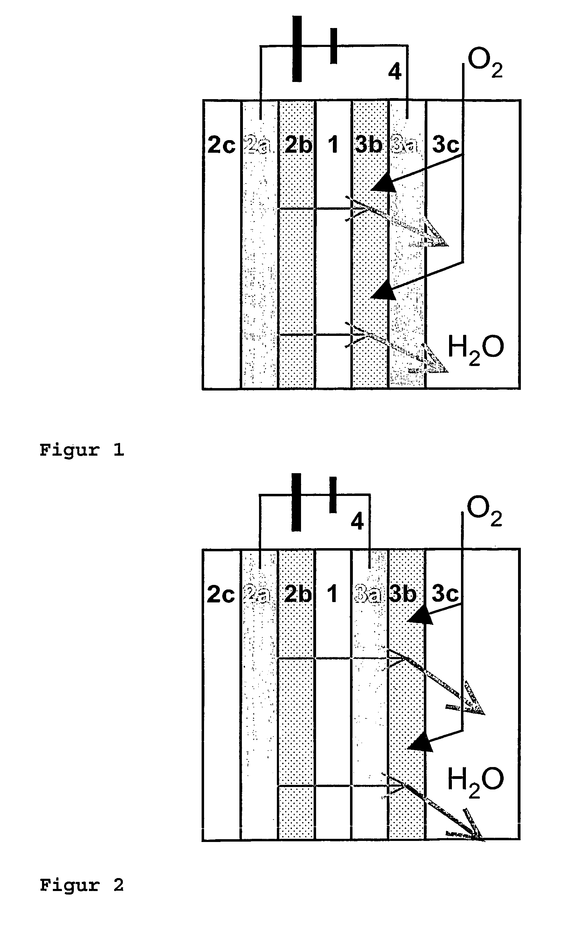

Figur 1 zeigt den schematischen Aufbau einer Brennstoffzelle gemäß dem Stand der Technik, bei dem die Katalysatorschicht der Kathode direkt an die Elektrolyt-Membran grenzt.

Demgegenüber zeigt die Figur 2 eine erfindungsgemäße Ausführungsform einer Brennstoffzelle mit einer Kathode 3, dessen Diffusionsschicht 3a direkt an die Elektrolyt-Membran 1 angrenzt und die Katalysatorschicht 3b zum freien Kathodenraum 3c weist.

## Patentansprüche

1. Niedertemperatur-Brennstoffzelle mit einer Anode, einer Kathode sowie einer dazwischen angeordneten Elektrolytmembran, wobei die Kathode eine Diffusionsschicht und eine darauf angeordnete Katalysatorschicht aufweist,
**dadurch gekennzeichnet, dass**
die Diffusionsschicht der Kathode direkt an die Elektrolyt-Membran angrenzt.

2. Niedertemperatur-Brennstoffzelle nach Anspruch 1, bei der die Katalysatorschicht der Kathode direkt an den freien Kathodenraum angrenzt.

3. Niedertemperatur-Brennstoffzelle nach Anspruch 1 bis 2, bei der die Diffusionsschicht der Kathode Ionen leitendes, insbesondere Protonen leitendes Material aufweist.

4. Verfahren zum Betreiben einer Niedertemperatur-Brennstoffzelle mit einer Anode, einer Kathode sowie einer dazwischen angeordneten Elektrolytmembran, wobei die Kathode eine Diffusionsschicht und eine darauf angeordnete Katalysatorschicht umfasst, mit den Schritten
- die auf der Anodenseite erzeugten Protonen wandern durch die Elektrolytmembran und durch die Diffusionsschicht der Kathode bis zur Katalysatorschicht,
- Sauerstoff wird über den freien Kathodenraum direkt bis an die Katalysatorschicht geführt.

5. Verfahren nach Anspruch 4, bei dem als Brennstoff Methanol oder eine Methanol-Wassermischung eingesetzt wird.

6. Verfahren nach einem der Ansprüche 4 bis 5, bei dem der Sauerstoff als reiner Sauerstoff oder als Luftsauerstoff zugeführt wird.

7. Verfahren nach einem der Ansprüche 4 bis 6, bei dem das an der Katalysatorschicht der Kathode erzeugte Wasser direkt in den freien Kathodenraum abgeführt wird.

## Claims

1. Low-temperature fuel cell with an anode, a cathode and an electrolyte membrane disposed between them, whereby the cathode has a diffusion layer and a catalytic layer disposed on it,
**characterized in that** the diffusion layer of the cathode directly adjoins the electrolyte membrane.

2. Low-temperature fuel cell in accordance with claim 1, in which the catalytic layer of the cathode directly adjoins the open cathode space.

3. Low-temperature fuel cell in accordance with claims 1 and 2, in which the diffusion layer of the cathode has ion-conducting, particularly proton-conducting material.

4. Process for operating a low-temperature fuel cell with an anode, a cathode and an electrolyte membrane disposed between them, whereby the cathode comprises a diffusion layer and a catalytic layer disposed on it, and with the stages whereby
- the protons produced on the anodal side diffuse, through the electrolyte membrane and through the diffusion layer of the cathode, to the catalytic layer, and
- oxygen is supplied directly to the catalytic layer via the open cathode space.

5. Process in accordance with claim 4, in which methanol or a mixture of water and methanol is used as fuel.

6. Process in accordance with one of claims 4 and 5, in which the oxygen is conveyed as pure oxygen or as atmospheric oxygen.

7. Process in accordance with one of claims 4 to 6, in which the water produced on the catalytic layer of the cathode is taken off directly into the open cathode space.

## Revendications

1. Pile à combustible à basse température comprenant une anode, une cathode ainsi qu'une membrane d'électrolyte interposée entre elles, la cathode ayant une couche de diffusion et une couche de catalyseur disposée sur celle-ci,
**caractérisée en ce que** la couche de diffusion de la cathode est voisine directement de la membrane d'électrolyte.

2. Pile à combustible à basse température suivant la revendication 1, dans laquelle la couche de catalyseur de la cathode est voisine directement de l'espace libre de la cathode.

3. Pile à combustible à basse température suivant la revendication 1 à 2, dans laquelle la couche de diffusion de la cathode comprend une matière conduisant des ions, notamment conduisant des protons.

4. Procédé pour faire fonctionner une pile à combustible à basse température ayant une anode, une cathode, ainsi qu'une membrane d'électrolyte interposée entre elles, la cathode comprenant une couche de diffusion et une couche de catalyseur disposée sur celle-ci, comportant les stades dans lesquels
- les protons produits du côté de l'anode migrent à travers la membrane d'électrolyte et à travers la couche de diffusion de la cathode jusqu'à la couche de catalyseur,
- de l'oxygène passe par l'espace libre de la cathode directement jusqu'à la couche de catalyseur.

5. Procédé suivant la revendication 4, dans lequel on utilise comme combustible du méthanol ou un mélange de méthanol et d'eau.

6. Procédé suivant l'une des revendications 4 à 5, dans lequel on apporte l'oxygène sous la forme d'oxygène pur ou sous la forme d'oxygène de l'air.

7. Procédé suivant l'une des revendications 4 à 6, dans lequel on évacue l'eau produite sur la couche de catalyseur de la cathode directement dans l'espace libre de la cathode.
